(19) **Europäisches Patentamt / European Patent Office / Office européen des brevets**

(11) **EP 4 558 439 B1**

(12) **FASCICULE DE BREVET EUROPEEN**

(45) Date de publication et mention de la délivrance du brevet:
**05.08.2026   Bulletin 2026/32**

(21) Numéro de dépôt: **23736184.5**

(22) Date de dépôt: **14.06.2023**

(51) Classification Internationale des Brevets (IPC):
**B66F 9/06** *(2006.01)*    **B66F 9/075** *(2006.01)*
**B66F 9/24** *(2006.01)*

(52) Classification Coopérative des Brevets (CPC):
**B66F 9/0755; B66F 9/063; B66F 9/24**

(86) Numéro de dépôt international:
**PCT/FR2023/050864**

(87) Numéro de publication internationale:
**WO 2024/018128 (25.01.2024 Gazette 2024/04)**

(54) **PROCÉDÉ DE TRANSPORT ET DE DÉPOSE D'UNE CHARGE PAR UN CHARIOT ÉLÉVATEUR AUTONOME**

**VERFAHREN ZUM TRANSPORTIEREN UND ABSETZEN EINER LAST MIT EINEM AUTONOMEN GABELSTAPLER**

**METHOD OF TRANSPORTING AND DEPOSITING A LOAD USING AN AUTONOMOUS FORKLIFT**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **21.07.2022  FR 2207492**

(43) Date de publication de la demande:
**28.05.2025   Bulletin 2025/22**

(73) Titulaire: **COMPAGNIE GENERALE DES ETABLISSEMENTS MICHELIN**
**63000 Clermont-Ferrand (FR)**

(72) Inventeurs:
- **BINDA, Yann**
  **63040 CLERMONT-FERRAND CEDEX 9 (FR)**
- **FAURE, Florian**
  **63040 CLERMONT-FERRAND CEDEX 09 (FR)**
- **BOUVET, Kévin**
  **63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**CN-A- 113 443 585    US-A1- 2016 090 283**
**US-B2- 10 954 111**

EP 4 558 439 B1

**Description**

**Domaine technique**

La présente invention concerne le domaine des véhicules autonomes pour le transport automatisé de charges, tels que des chariots élévateurs autonomes.

**Etat de la technique antérieure**

Les véhicules autonomes pour le transport de charges sont de plus en plus utilisés pour gagner en productivité et pour améliorer la gestion logistique dans des usines ou dans des entrepôts.

Les chariots élévateurs automatisés sont un exemple de tels véhicules et permettent par exemple de charger, transporter et positionner en hauteur une charge sans intervention humaine.

Cependant, dans des environnements tels que des usines ou des entrepôts, l'intervention humaine reste nécessaire en complément des opérations automatisées, par exemple pour contrôler le bon déroulement de ces opérations ou pour réaliser des tâches qui ne peuvent pas être effectuées par des machines seules. Ces environnements sont donc partagés entre des humains et des machines autonomes.

La sécurité des personnes est fondamentale dans de tels environnements de travail et requiert en conséquence la mise en place de procédures spécifiques.

Par exemple, lors des opérations de dépose d'une charge sur un rayonnage de stockage, il convient de s'assurer que l'emplacement du rayonnage destiné à accueillir la charge est vide.

Dans ce but, les chariots élévateurs sont classiquement munis de télémètres ou de cellules photoélectriques.

Cependant, ces technologies ne permettent pas de pouvoir détecter tout type de charges pouvant être présentes sur le rayonnage de stockage. Ceci est par exemple être le cas lorsque la charge comprend des trous ou encore des alésages comme cela est le cas notamment pour les pneumatiques.

Le document US 2016/090283 A1 divulgue un procédé de transport et de dépose d'une charge par un chariot élévateur autonome comprenant :

- un organe de levage comprenant une fourche mobile verticalement et munie d'au moins un bras pour le levage de charges,
- un système d'entraînement pour le déplacement du chariot élévateur,
- une unité de contrôle apte à commander le fonctionnement du système d'entraînement pour guider de façon autonome le chariot élévateur, et apte à commander le déplacement vertical de la fourche de l'organe de levage,
- un dispositif de détection sans contact d'un obstacle, ledit dispositif de détection étant mobile conjointement avec l'organe de levage et apte à émettre un faisceau lumineux dirigé vers l'avant du chariot élévateur et détectant au moins une zone de détection en trois dimensions prédéfinie, le dispositif de détection étant fixé sur l'organe de levage pour que ledit faisceau lumineux passe au-dessus de la charge transportée, et
- un dispositif de mesure pour déterminer la hauteur de la fourche de l'organe de levage par rapport au sol, l'unité de contrôle recevant des informations représentatives de la hauteur de la fourche par rapport au sol issues du dispositif de mesure et de la présence ou de l'absence de l'obstacle dans ladite zone de détection en trois dimensions prédéfinie issues du dispositif de détection sans contact, et étant apte à commander le fonctionnement du système d'entraînement et le déplacement vertical de la fourche de l'organe de levage en fonction de ces informations, ledit procédé comprend :

- une étape de positionnement du chariot élévateur par rapport à une structure destinée à supporter la charge dans une position d'approche par rapport à ladite structure,
- lorsque le chariot élévateur a atteint la position d'approche, une étape de détection d'obstacle dans un emplacement où la charge doit être délivrée en orientant le dispositif de détection selon un angle de vue différent,
- une étape d'avancement du chariot élévateur par rapport à la structure jusqu'à une position de dépose si aucun obstacle n'a été détecté dans le volume de contrôle par le dispositif de détection sans contact lors de l'étape de détection d'obstacle, et
- une étape de dépose de la charge sur la structure à la position de dépose.

**Exposé de l'invention**

Au vu de ce qui précède, le but de l'invention est donc de proposer un procédé de transport et de dépose d'une charge par un chariot élévateur autonome capable de détecter à distance et sans contact des charges déjà disposées sur un rayonnage de stockage, avec une fiabilité élevée de détection quelle que soit la taille ou la forme des charges à détecter.

La présente divulgation montre un chariot élévateur autonome comprenant un organe de levage comprenant une fourche mobile verticalement et munie d'au moins un bras pour le levage de charges, un système d'entraînement pour le déplacement du chariot élévateur, une unité de contrôle apte à commander le fonctionnement du système d'entraînement pour guider de façon autonome le chariot élévateur et apte à commander le déplacement vertical de la fourche de l'organe de levage.

Selon une caractéristique générale non couverte par les revendications, le chariot élévateur comprend en outre un dispositif de détection sans contact d'un obstacle, ledit dispositif de détection étant mobile conjointement avec l'organe de levage et apte à émettre un faisceau lumineux dirigé vers l'avant du chariot élévateur et balayant au moins une zone de détection plane prédéfinie. Le dispositif de détection est fixé sur l'organe de levage pour que ledit faisceau lumineux passe au-dessus de la charge transportée.

Ainsi, le faisceau lumineux passant au-dessus de la charge transportée, la présence de la charge ne gêne pas la détection effectuée par le dispositif de détection.

Selon une autre caractéristique générale non couverte par les revendications, le chariot élévateur comprend en outre un dispositif de mesure pour déterminer la hauteur de la fourche de l'organe de levage par rapport au sol.

Selon une autre caractéristique générale non couverte par les revendications, l'unité de contrôle reçoit des informations représentatives de la hauteur de la fourche par rapport au sol issues du dispositif de mesure et de la présence ou de l'absence de l'obstacle dans ladite zone de détection plane prédéfinie issues du dispositif de détection sans contact.

Selon une autre caractéristique générale non couverte par les revendications, l'unité de contrôle est apte à commander le fonctionnement du système d'entraînement et le déplacement vertical de la fourche de l'organe de levage en fonction de ces informations.

Avec un tel chariot élévateur autonome, il devient possible de s'assurer, lors de la dépose d'une charge sur un rayonnage de stockage, que l'emplacement du rayonnage destiné à accueillir cette charge est libre de toute autre charge qui pourrait faire obstacle à la dépose, et que l'avancement du chariot élévateur peut être réalisé sans risque de poussée et donc de chute d'une charge déjà présente.

En outre, l'intégration d'un tel dispositif de détection sans contact permet de pouvoir réaliser une détection de tout type de charges à distance.

Avantageusement, le dispositif de détection est fixé au-dessus d'un tablier de l'organe de levage et supportant la fourche.

De préférence, le tablier de l'organe de levage comprend une traverse supérieure sur laquelle le dispositif de détection est fixé.

De préférence, la hauteur de la fourche de l'organe de levage par rapport au sol est déterminée en continu. Cette mesure en continu accroit encore la fiabilité du chariot élévateur.

Selon une autre caractéristique non couverte par les revendications, le chariot élévateur comprend en outre un moyen de détermination d'un déplacement rectiligne du chariot élévateur. Le moyen de détermination est apte à acquérir des informations représentatives du déplacement du chariot élévateur.

Selon une autre caractéristique non couverte par les revendications, l'unité de contrôle reçoit des informations représentatives du déplacement du chariot élévateur issues du moyen de détermination et est apte à commander le fonctionnement du système d'entraînement en fonction de ces informations.

Dans un mode de réalisation particulier non couvert par les revendications, le moyen de détermination comprend un capteur tout ou rien orienté perpendiculairement à une roue du chariot élévateur et couplé au châssis dudit chariot, et un témoin placé sur une barre de direction de ladite roue, le capteur tout ou rien étant apte à détecter le témoin. La détection du témoin correspond à une orientation des roues selon un axe longitudinal du chariot élévateur. Le moyen de détermination comprend également un dispositif de mesure du déplacement du chariot élévateur, ledit dispositif de mesure du déplacement du chariot élévateur étant apte à acquérir des informations représentatives du déplacement du chariot élévateur.

Dans un autre mode de réalisation particulier non couvert par les revendications, le moyen de détermination comprend un capteur de direction orienté perpendiculairement à une roue du chariot élévateur et couplé au châssis dudit chariot, et cible aimantée fixée sur une barre de direction de ladite roue. Le capteur est apte à détecter la position de la cible aimantée en fonction de l'angle de direction de ladite roue. Le moyen de détermination comprend également un dispositif de mesure du déplacement du chariot élévateur, ledit dispositif de mesure du déplacement du chariot élévateur étant apte à acquérir des informations représentatives du déplacement du chariot élévateur.

Avantageusement, le faisceau lumineux émis par le dispositif de détection forme, vu de côté du chariot élévateur, avec un axe horizontal un angle d'inclinaison.

En variante, le faisceau lumineux émis par le dispositif de détection pourrait être horizontal.

De préférence, le faisceau lumineux émis par le dispositif de détection est dirigé vers le bas.

En variante, le faisceau lumineux émis par le dispositif de détection pourrait être dirigé vers le haut.

Selon une caractéristique non couverte par les revendications, la zone de détection plane prédéfinie balayée par le faisceau lumineux émis par le dispositif de détection sans contact est définie par quatre points délimitant un rectangle.

Le chariot élévateur autonome comprend un dispositif de localisation embarqué configuré pour acquérir des données de position du chariot élévateur et communiquant avec l'unité de contrôle. De préférence, le dispositif de détection sans contact est distinct du dispositif de localisation. De préférence également, le moyen de détermination du déplacement rectiligne est distinct du dispositif de localisation.

L'invention a pour objet un procédé de transport et de dépose d'une charge par un chariot élévateur autonome tel que décrit ci-dessus.

Le procédé de transport et dépose comprend :

un chariot élévateur autonome comprenant :

- un organe de levage comprenant une fourche mobile verticalement et munie d'au moins un bras pour le levage de charges,
- un système d'entraînement pour le déplacement du chariot élévateur,
- une unité de contrôle apte à commander le fonctionnement du système d'entraînement pour guider de façon autonome le chariot élévateur, et apte à commander le déplacement vertical de la fourche de l'organe de levage,
- un dispositif de détection sans contact d'un obstacle, ledit dispositif de détection étant mobile conjointement avec l'organe de levage et apte à émettre un faisceau lumineux dirigé vers l'avant du chariot élévateur et balayant au moins une zone de détection plane prédéfinie, le dispositif de détection étant fixé sur l'organe de levage pour que ledit faisceau lumineux passe au-dessus de la charge transportée, et
- un dispositif de mesure pour déterminer la hauteur de la fourche de l'organe de levage par rapport au sol, l'unité de contrôle recevant des informations représentatives de la hauteur de la fourche par rapport au sol issues du dispositif de mesure et de la présence ou de l'absence de l'obstacle dans ladite zone de détection plane prédéfinie issues du dispositif de détection sans contact, et étant apte à commander le fonctionnement du système d'entraînement et le déplacement vertical de la fourche de l'organe de levage en fonction de ces informations, le procédé comprend :

  - une étape de positionnement du chariot élévateur par rapport à une structure destinée à supporter la charge dans une position d'approche par rapport à ladite structure,
  - lorsque le chariot élévateur a atteint la position d'approche, une étape de positionnement en hauteur de la fourche de l'organe de levage et une étape de détection d'obstacle par le dispositif de détection sans contact dans un volume de contrôle balayé par le faisceau lumineux,
  - une étape d'avancement du chariot élévateur par rapport à la structure jusqu'à une position de dépose si aucun obstacle n'a été détecté dans le volume de contrôle par le dispositif de détection sans contact lors de l'étape de détection d'obstacle, et
  - une étape de dépose de la charge sur la structure à la position de dépose.

Avantageusement, l'étape de détection d'obstacle comprend :

- une sous-étape d'activation du dispositif de détection lorsque la fourche de l'organe de levage a atteint une première hauteur prédéterminée par rapport au sol lors du positionnement en hauteur de la fourche, et
- une sous-étape de désactivation du dispositif de détection lorsque la fourche de l'organe de levage a atteint une deuxième hauteur par rapport au sol, qui est différente de la première hauteur prédéterminée.

Avantageusement, le procédé comprend une étape de contrôle du déplacement rectiligne du chariot élévateur jusqu'à la position de dépose lors de l'étape d'avancement.

Avantageusement, l'étape de dépose de la charge sur la structure à la position de dépose est réalisée si le déplacement contrôlé du chariot élévateur est purement rectiligne ou sensiblement rectiligne.

Par « sensiblement rectiligne », on entend que le déplacement du chariot élévateur présente des variations transversales par rapport à un déplacement purement rectiligne qui restent inférieures ou égales à une valeur limite prédéterminée.

## Brève description des figures

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] est une vue en perspective d'un chariot élévateur autonome selon un exemple de réalisation de l'invention ;
[Fig 2] à [Fig 4], [Fig 6], [Fig 7] et [Fig 8] illustrent schématiquement le chariot élévateur de la figure 1 lors de son utilisation ;
[Fig 5] est une vue de dessus partielle du chariot élévateur de la figure 1 sur laquelle est représentée schématiquement une première zone de détection de charge ; et

[Fig 9] illustre l'organigramme d'un procédé de transport de charge et de dépose selon un mode de mise en œuvre de l'invention.

**Exposé détaillé d'au moins un mode de réalisation**

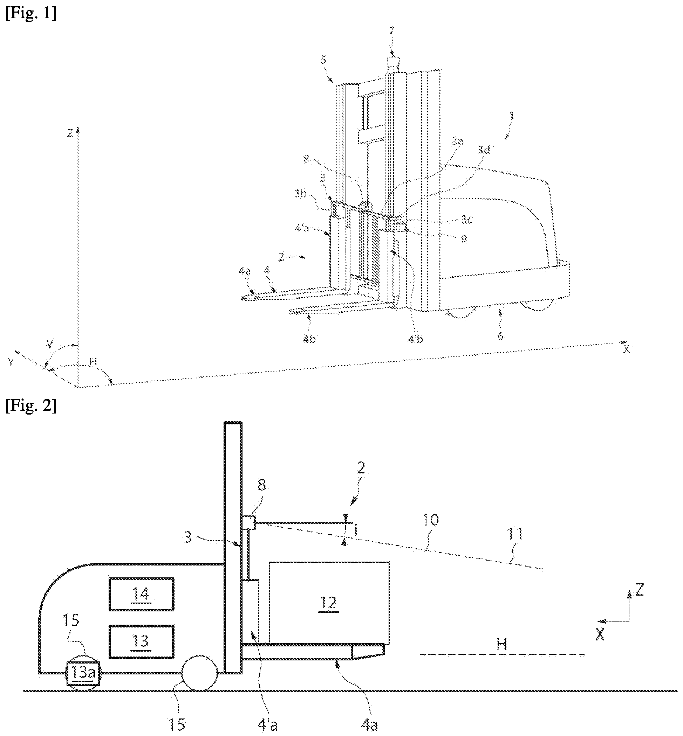

Sur la figure 1 on a représenté les éléments principaux d'un chariot élévateur 1 autonome selon un mode de réalisation de l'invention.

L'architecture du chariot élévateur 1 est donnée à titre d'exemple et ne limite pas l'invention à la seule configuration de l'architecture présentée. Il est entendu que l'invention concerne également des chariots élévateurs prévus pour fonctionner en mode manuel et qui ont été adaptés pour permettre un deuxième mode de fonctionnement en mode autonome.

Le chariot élévateur 1 autonome illustré à la figure 1 comprend un organe de levage 2 comprenant un tablier 3 qui supporte une fourche 4 comprenant deux bras 4a, 4b espacés latéralement et s'étendant vers l'avant du chariot. En variante, la fourche 4 pourrait comprendre un seul bras.

Le tablier 3 forme un cadre. Le tablier 3 est muni d'une traverse supérieure 3a horizontale, et de deux bras 3b, 3c prolongeant verticalement vers le bas la traverse supérieure 3a.

La fourche 4 comprend également deux montants 4'a, 4'b qui sont fixés au tablier 3 et qui supportent chacun un des bras 4a, 4b. Chacun des montants 4'a, 4'b est fixé sur un des bras 3b, 3c du tablier.

Les bras 4a, 4b de la fourche sont généralement utilisés pour s'insérer dans des tunnels d'insertion prévus dans les palettes de transport supportant les charges à soulever. Les montants 4'a, 4'b permettent de soulever les bras 4a, 4b afin de pouvoir soulever une palette à transporter ou un autre type de charge et de pouvoir placer ou attraper une palette ou un autre type de charge en hauteur.

La fourche 4 est apte à se déplacer en translation dans un plan vertical V défini par le tablier 3, le long d'un mât 5 vertical du chariot. Les montants 4'a, 4'b peuvent coulisser le long du mât 5. Les bras 4a, 4b de la fourche sont mobiles entre une position haute extrême, et une position basse extrême qui est illustrée à la figure 1 et qui correspond à une position de roulage. Dans la position basse extrême, les bras 4a, 4b sont situés à distance du sol.

Les axes longitudinaux des bras 4a, 4b sont parallèles. Ces axes longitudinaux sont orientés parallèlement à un axe horizontal X, et définissent un plan horizontal H appelé plan de levage. Les bras 4a, 4b de la fourche 4 sont perpendiculaires au plan vertical V. Les bras 4a, 4b de la fourche 4 sont aussi de préférence déplaçables latéralement l'un par rapport à l'autre.

En variante, les bras 4a, 4b pourraient être également télescopiques ou escamotables, et/ou orientables angulairement autour de leur axe longitudinal.

De manière connue en soi, le chariot 1 est équipé d'un système d'entraînement 6 permettant le déplacement du chariot 1. Le système d'entraînement comprend au moins un moteur électrique ou thermique (non représenté) permettant l'entrainement des roues 15 du chariot 1.

Le chariot 1 est également équipé d'un dispositif de localisation 7 embarqué, et d'une unité de contrôle 14 (figure 2) embarquée recevant les informations issues du dispositif de localisation 7 pour commander de façon autonome le déplacement du chariot élévateur.

L'unité de contrôle 14 comprend les moyens matériels et logiciels pour commander le fonctionnement du système d'entraînement 6 en fonction des informations reçues du dispositif de localisation 7. L'unité de contrôle 14 permet également de commander le déplacement autonome de l'organe de levage 2.

Le chariot 1 est également équipé d'un dispositif 8 de détection sans contact qui est mobile conjointement avec l'organe de levage 2, et d'un dispositif 9 de mesure pour déterminer la hauteur de la fourche 4 par rapport au sol. Les données issues du dispositif 8 de détection et du dispositif 9 de mesure sont transmises à l'unité de contrôle 14. Le dispositif 8 de détection et le dispositif 9 de mesure sont distincts du dispositif de localisation 7.

De préférence, le dispositif 9 mesure en continu la hauteur relative entre le mât 5 et le tablier 3. Dans l'exemple de réalisation illustré, le dispositif 9 de mesure est fixé au mât 5 du chariot élévateur et est orienté vers une cible 3d fixée au tablier 3. Le dispositif de mesure 9 est fixé au mât 5 à une hauteur constante par rapport au sol. Le dispositif de mesure 9 est configuré pour mesurer la hauteur relative entre le mât 5 et le tablier 3. L'unité de contrôle 14 détermine la hauteur de la fourche à partir de la mesure de la hauteur relative entre le mât 5 et le tablier 3 en soustrayant la valeur d'un paramètre constant de décalage prédéterminé qui correspond à la hauteur relative entre le mât 5 et le tablier 3 lorsque la fourche 4 se situe dans la position la plus basse. Ainsi, lorsque la fourche 4 se situe dans la position la plus basse, la valeur déterminée de la hauteur de la fourche 4 est égale à zéro. A titre d'exemple, le dispositif 9 de mesure peut comprendre ou télémètre, ou deux télémètres redondants, pour déterminer la hauteur de la fourche 4 par rapport au sol.

En variante, la détermination de la hauteur de la fourche 4 par rapport au sol pourrait se faire directement au niveau du dispositif 9 de mesure en soustrayant la valeur dudit paramètre constant de décalage de la valeur mesurée de hauteur relative entre le mât 5 et le tablier 3.

Comme indiqué précédemment, dans l'exemple de réalisation illustré, le dispositif 9 de mesure est fixé au mât 5 à une hauteur constante par rapport au sol. Alternativement, le dispositif 9 de mesure pourrait être fixé à une hauteur constante par rapport au sol sur un autre élément du chariot que le mât 5. En variante, il est également possible de prévoir que le dispositif 9 de mesure soit mobile conjointement avec l'organe de levage 2, par exemple en étant fixé sur le tablier 3 de l'organe de levage, notamment fixé sur un des bras du tablier 3.

Le dispositif 8 de détection est fixé sur le tablier 3 sans possibilité de déplacement relatif par rapport audit tablier. Le dispositif 8 de détection est ici fixé sur la traverse supérieure 3a du tablier.

Comme cela sera décrit plus en détail par la suite, le dispositif 8 de détection sans contact est apte à émettre un faisceau lumineux 10 (figure 2) dirigé vers l'avant du chariot élévateur 1, passant au-dessus de la charge 12 transportée, et balayant une zone de détection 11 plane pour détecter la présence ou l'absence d'un obstacle.

Le dispositif 8 de détection est fixé sur le tablier 3 de l'organe de levage pour que le faisceau lumineux 10 passe au-dessus de tout type de charges pouvant être transportées par le chariot élévateur dans l'application considérée du chariot.

Dans l'exemple de réalisation illustré, le faisceau lumineux 10 émis par le dispositif 8 de détection est incliné vers le bas. Ainsi le faisceau lumineux 10 émis par le dispositif de détection 8 forme, vu de côté du chariot élévateur, avec un axe horizontal un angle i d'inclinaison.

En fonctionnement, le dispositif 8 de détection est configuré pour détecter si un obstacle se trouve à l'intérieur de la zone 11 de détection. L'obstacle est détecté par le dispositif 8 lorsqu'il intersecte le faisceau lumineux 10 et qu'il se trouve à l'intérieur de la zone 11 de détection. Le dispositif 8 de détection est apte à détecter que l'obstacle se trouve à l'intérieur de la zone 11 de détection par une mesure de distance et d'angle.

S'il n'y a pas d'intersection du rayon lumineux 10 émis par le dispositif 8 par l'obstacle, ou si cette intersection existe mais que le dispositif 8 de détection détecte que la distance le séparant de l'obstacle est en-dehors de la zone 11 de détection plane prédéfinie, alors le dispositif 8 détecte une absence d'obstacle dans ladite zone de détection.

Le chariot 1 est également équipé d'un moyen de détermination 13 (figure 2) d'un déplacement rectiligne du chariot élévateur par rapport au sol, ledit moyen de détermination 13 étant apte à acquérir des informations représentatives du déplacement rectiligne du chariot élévateur sur le sol. Le moyen de détermination est distinct du dispositif de localisation 7.

Le moyen de détermination 13 comprend un dispositif de mesure 13a du déplacement du chariot élévateur 1, ledit dispositif de mesure 13a étant configuré pour acquérir des informations représentatives du déplacement du chariot 1 et pour les transmettre à l'unité de contrôle 14.

De préférence, le dispositif de mesure 13a comprend au moins un codeur rotatif apte à mesurer la rotation d'au moins une des roues 15 du chariot élévateur 1. Le codeur est apte à déterminer la valeur du déplacement du chariot élévateur 1 en fonction du nombre de tours détecté de la roue 15 associée.

Le moyen de détermination 13 comprend également un capteur de direction orienté perpendiculairement à une roue 15 du chariot élévateur et couplé au châssis du chariot, et une cible aimantée fixée sur une barre de direction de la roue 15 du chariot élévateur. Le capteur est apte à détecter la position de la cible aimantée qui est fonction de l'angle de direction de cette roue 15 correspondant à l'angle de direction du déplacement du chariot élévateur.

Le contrôle du déplacement rectiligne du chariot élévateur 1 est réalisé à partir des informations du dispositif de mesure 13a et du capteur de direction, acquises à une fréquence prédéterminée. A titre indicatif, la fréquence d'acquisition des informations permettant le contrôle du déplacement rectiligne du chariot élévateur 1 peut par exemple être de 10 millisecondes. Le contrôle du déplacement purement rectiligne ou sensiblement rectiligne du chariot élévateur 1 est réalisé selon l'équation suivante :

$$|\textstyle\sum(angle \times distance)| \leq K \qquad\qquad (1)$$

dans laquelle,

> *angle* représente l'angle de direction du déplacement du chariot élévateur par rapport à son axe longitudinal mesuré à un instant donné par le capteur de direction, en degrés ;
> *distance* représente la distance parcourue par le chariot élévateur mesuré par dispositif de mesure 13a entre deux acquisitions, en millimètres ;
> | | est la valeur absolue de la somme calculée, et ;
> *K* représente une valeur limite prédéterminée correspondant à un déplacement transversal maximum admissible du chariot élévateur.

Comme indiqué précédemment, l'unité de contrôle 14 reçoit les informations issues du dispositif de localisation 7, ainsi que les informations représentatives de la hauteur de la fourche issues du dispositif 9 de mesure et les informations représentatives de la présence ou de l'absence d'un obstacle dans la zone de détection considérée du dispositif 8 de détection. L'unité de contrôle 14 reçoit encore les informations représentatives du déplacement rectiligne issues du moyen de détermination 13.

L'unité de contrôle 14 commande en fonction de ces informations le fonctionnement du système d'entraînement 6 et le déplacement vertical de la fourche 4.

Dans l'exemple de réalisation décrit, le moyen de détermination 13 comprend un capteur de direction et une cible aimantée qui peut par exemple être une règle magnétostrictive. Dans un mode de réalisation alternatif, le moyen de détermination 13 pourrait comprendre un capteur tout ou rien orienté perpendiculairement à une roue 15 du chariot élévateur et couplé au châssis du chariot 1. Dans ce cas, le moyen de détermination 13 comprend également un témoin placé sur la barre de direction de la roue 15. Le capteur tout ou rien est apte à détecter le témoin, la détection correspondant à une orientation des roues 15 selon un axe longitudinal du chariot 1. Par exemple, le témoin peut comprendre une étiquette de type radio-identification.

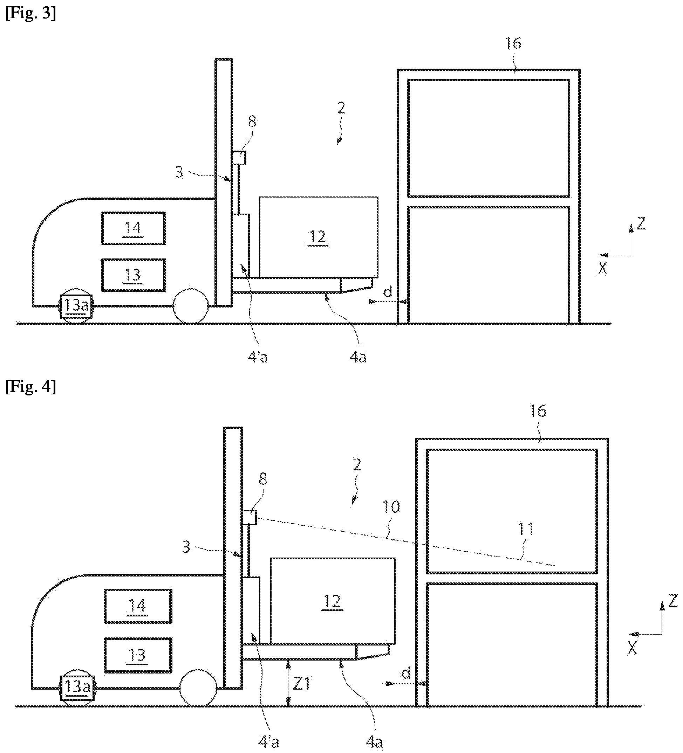

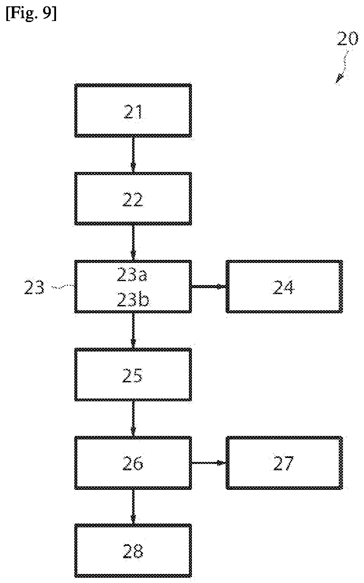

On va maintenant décrire, en référence aux figures 3 à 8, le principe de fonctionnement du chariot 1 élévateur autonome pour l'opération de dépose d'une charge 12 en sécurité sur une structure de type rayonnage 16 destinée à accueillir la charge 12 transportée par le chariot et le procédé de dépose 20 associé illustré en figure 9.

Le procédé 20 commence par une étape 21 de positionnement durant laquelle l'unité de contrôle 14 pilote le chariot 1 élévateur pour le positionner par rapport au rayonnage 16 jusqu'à une position d'approche prédéfinie. Dans un mode de mise en œuvre particulier, la position du chariot 1 élévateur dans la position d'approche peut être enregistrée par l'unité de contrôle 14.

Dans cette phase initiale illustrée en figure 3, l'unité de contrôle 14 commande le fonctionnement du chariot 1 pour obtenir son rapprochement du rayonnage 16. Le chariot 1 est commandé par l'unité de contrôle 14 en fonction des données issues du dispositif de localisation 7. Lors de son déplacement, le chariot 1 est commandé pour garder une distance minimale de sécurité d par rapport au rayonnage 16. Lors de la phase initiale de positionnement du chariot élévateur et des phases successives de positionnement en hauteur des bras de la fourche 4, le chariot 1 est commandé pour garder cette distance horizontale minimale de sécurité d entre l'extrémité en porte-à-faux des bras de la fourche 4 et le rayonnage 16 afin de permettre le positionnement en sécurité des bras en hauteur.

Lorsque le chariot 1 atteint la position d'approche, le procédé 20 se poursuit par une étape 22 de positionnement en hauteur de la fourche 4, durant laquelle l'unité de contrôle 14 commande le déplacement vertical des bras 4a, 4b entre une première hauteur Z1 et une deuxième hauteur Z2 par rapport au sol.

L'unité de contrôle 14 commande le positionnement vertical des bras 4a, 4b jusqu'à atteindre la première hauteur Z1 (figure 4) par rapport au sol, en fonction des données reçues du dispositif de mesure 9. La valeur de la hauteur Z1 est prédéterminée. A titre d'exemple, la valeur de la hauteur Z1 peut dépendre de données telles que les dimensions du rayonnage 16 et de la charge 12 à déposer, du positionnement du dispositif 8 de détection par rapport aux bras 4a, 4b et de l'inclinaison i du faisceau lumineux 10 apte à être émis par le dispositif 8 de détection.

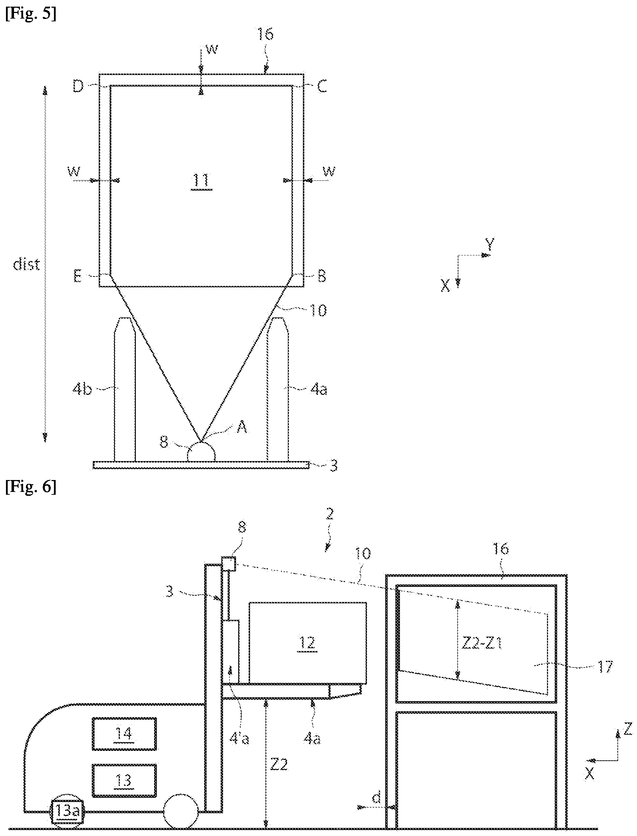

Lorsque les bras de la fourche 4 ont atteint la hauteur Z1, le procédé se poursuit par l'étape 23 de détection d'obstacle. Cette étape 23 comprend une sous-étape 23a d'activation, dans laquelle l'unité de contrôle 14 commande l'activation du dispositif 8 de détection sans contact qui émet le faisceau lumineux 10 lorsque les bras de la fourche 4 ont atteint la hauteur Z1, et une sous-étape 23b de désactivation, durant laquelle l'unité de contrôle 14 commande la désactivation du dispositif 8 de détection sans contact 10 lorsque les bras de la fourche 4 ont atteint la deuxième hauteur Z2 (figure 6) différente de la première hauteur Z1.

L'étape 23 de détection d'obstacle est ainsi réalisée durant l'étape 22 de positionnement en hauteur de la fourche 4. Le déplacement vertical des bras 4a, 4b durant cette étape 22 est continu.

La valeur de la hauteur Z2 peut être prédéterminée et peut dépendre des mêmes données que celles utilisées pour déterminer la valeur de la hauteur Z1. Lorsque la valeur de la hauteur Z2 est prédéterminée, l'unité de contrôle 14 commande le positionnement vertical des bras de la fourche 4 jusqu'à cette hauteur Z2 en fonction des données reçues du dispositif de mesure 9.

Alternativement, la valeur de la hauteur Z2 peut être définie en fonction d'une temporisation qui se déclenche à partir de la première hauteur Z1.

Lors de la sous-étape 23a d'activation, le faisceau lumineux 10 émis par le dispositif 8 de détection balaye une zone 11 de détection prédéfinie plane. Le dispositif 8 de détection reste activé jusqu'à ce que les bras 4a, 4b atteignent la hauteur Z2.

La largeur et la profondeur de la projection verticale de la zone 11 de détection ne dépassent pas respectivement la largeur et la profondeur du rayonnage 16.

Dans l'exemple de réalisation illustré, la zone 11 de détection est définie par quatre points distincts délimitant un rectangle, tels que les points B, C, D et E de la figure 5. Le point A représente schématiquement le point d'émission du faisceau lumineux 10 en sortie du dispositif 8 de détection.

La projection verticale du rectangle délimité par les points B, C, D et E se situe à une distance minimale w des bords intérieurs du rayonnage 12, constituant ainsi une marge de sécurité par rapport à la détection non-souhaitée desdits bords du rayonnage 12. A titre indicatif, la distance w peut être égale à 100 mm.

Comme indiqué précédemment, le dispositif 8 de détection est actif durant le déplacement vertical entre la hauteur Z1 et la hauteur Z2, et émet le faisceau lumineux 10 pour détecter tout obstacle présent dans la zone de détection 11. Etant donné que le dispositif 8 de détection effectue un déplacement vertical entre les hauteurs Z1 et Z2, il s'ensuit que le balayage du faisceau lumineux 10 est réalisé sur tout l'intervalle de hauteur entre Z1 et Z2, et que la détection d'obstacle est effectuée dans un volume de contrôle 17 (figure 6) de hauteur égale au déplacement vertical entre les hauteurs Z1 et Z2, et de section transversale égale à la zone de détection 11.

Si un obstacle est détecté dans le volume de contrôle 17 lors de l'étape 23 de détection d'obstacle, l'unité de contrôle 14 commande l'arrêt du chariot 1 pour une remise en ordre par un opérateur (étape 24).

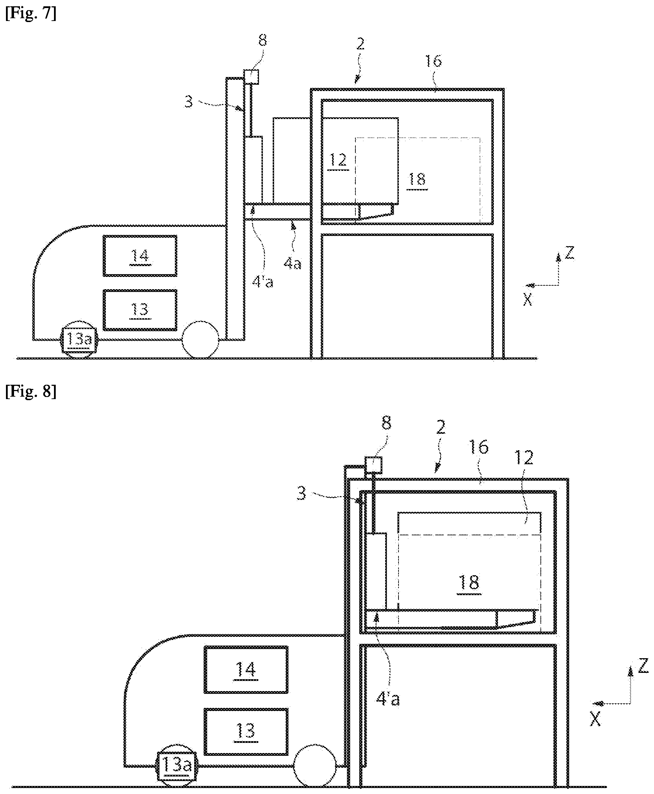

Au contraire, si aucun obstacle n'a été détecté, le procédé se poursuit par une étape 25 d'avancement du chariot 1 élévateur durant laquelle l'unité de contrôle 14 pilote le déplacement rectiligne du chariot à partir de la position d'approche en direction d'une position 18 de dépose prédéterminée sur le rayonnage 16 (figure 7). Le moyen de détermination 13 acquiert des informations représentatives du déplacement du chariot élévateur lors de l'avancement. Comme indiqué précédemment, l'acquisition de ces informations est réalisée à une fréquence prédéterminée.

Dans un mode de mise en œuvre particulier, durant l'étape 25 d'avancement du chariot 1 élévateur, le procédé se poursuit par une étape 26 de contrôle durant laquelle l'unité de contrôle 14 contrôle le déplacement rectiligne du chariot en fonction des données issues du moyen de détermination 13 jusqu'à atteindre longitudinalement la position de dépose 18. A ce stade, la charge 12 est située verticalement au-dessus de la position de dépose 18. Ce contrôle assure que les éventuelles déviations transversales du chariot 1 élévateur par rapport au déplacement rectiligne commandé restent inférieures à la valeur limite prédéterminée admissible pour assurer la sécurité.

Si le déplacement du chariot 1 élévateur n'est pas déterminé comme étant rectiligne ou sensiblement rectiligne par le moyen de détermination 13, l'unité de contrôle 14 commande l'arrêt du chariot 1 pour une remise en ordre par un opérateur (étape 27).

Dans le cas inverse, l'unité de contrôle 14 pilote le déplacement rectiligne du chariot pour atteindre longitudinalement la position 18 de dépose prédéterminée. Une fois que le chariot a atteint cette position (figure 8), le procédé se poursuit avec l'étape 28 de dépose durant laquelle l'unité de contrôle 14 commande le positionnement vertical des bras 4a, 4b par rapport au rayonnage 16 afin d'y déposer la charge 12 à la position de dépose 18.

Durant cette étape, l'unité de contrôle 14 pilote l'abaissement de la charge 12 au-dessus du rayonnage 16 jusqu'à la mise en contact de la charge 12 avec la partie du rayonnage 16 destinée à accueillir la charge 12. L'unité de contrôle 14 continue ensuite l'abaissement des bras 4a, 4b induisant un déplacement relatif vertical entre les bras 4a, 4b et la charge 12 signifiant que celle-ci n'est plus en contact avec les bras 4a, 4b et repose entièrement sur le rayonnage 16.

En variante, le procédé 20 pourrait comprendre une étape supplémentaire de positionnement en hauteur de la fourche réalisée après la sous-étape 23b de désactivation du dispositif 8 de détection sans contact et avant l'étape 25 d'avancement. Lors de cette étape supplémentaire, le positionnement en hauteur de la fourche peut être réalisé de manière continue, autrement dit sans marquer d'arrêt vertical depuis l'étape 22 de positionnement en hauteur de la fourche.

Dans un autre mode de mise en œuvre particulier, dans l'étape 25 d'avancement du chariot l'unité de contrôle 14 peut limiter l'avancement du chariot élévateur depuis la position d'approche à une valeur maximale *dist* (figure 5) correspondant à la composante mesurée sur l'axe X de la distance minimale entre le dispositif de détection 8 et le côté distal CD de la zone de détection 11.

Dans le procédé de dépose illustré, l'étape 22 de positionnement en hauteur s'effectue par levage de la fourche. Alternativement, l'étape 22 de positionnement en hauteur pourrait s'effectuer par descente de la fourche. Dans ce cas, la première hauteur Z1 est supérieure à la deuxième hauteur Z2.

## Revendications

**1.** Procédé (20) de transport et de dépose d'une charge (12) par un chariot élévateur (1) autonome comprenant :

- un organe de levage (2) comprenant une fourche (4) mobile verticalement et munie d'au moins un bras (4b, 4b) pour le levage de charges (10),
- un système d'entraînement (6) pour le déplacement du chariot élévateur (1),
- une unité de contrôle (14) apte à commander le fonctionnement du système d'entraînement (6) pour guider de façon autonome le chariot élévateur, et apte à commander le déplacement vertical de la fourche (4) de l'organe de levage,
- un dispositif de détection (8) sans contact d'un obstacle, ledit dispositif de détection (8) étant mobile conjointement avec l'organe de levage (2) et apte à émettre un faisceau lumineux (10) dirigé vers l'avant du chariot élévateur (1) et balayant au moins une zone de détection (11) plane prédéfinie, le dispositif de détection (8) étant fixé sur l'organe de levage (2) pour que ledit faisceau lumineux (10) passe au-dessus de la charge (12) transportée, et

- un dispositif de mesure (9) pour déterminer la hauteur de la fourche (4) de l'organe de levage par rapport au sol, l'unité de contrôle (14) recevant des informations représentatives de la hauteur de la fourche (4) par rapport au sol issues du dispositif de mesure (9) et de la présence ou de l'absence de l'obstacle dans ladite zone de détection (11) plane prédéfinie issues du dispositif de détection (8) sans contact, et étant apte à commander le fonctionnement du système d'entraînement (6) et le déplacement vertical de la fourche (4) de l'organe de levage en fonction de ces informations,

ledit procédé comprend :

- une étape (21) de positionnement du chariot élévateur par rapport à une structure (16) destinée à supporter la charge dans une position d'approche par rapport à ladite structure,
- lorsque le chariot élévateur (1) a atteint la position d'approche, une étape (22) de positionnement en hauteur de la fourche (4) de l'organe de levage et une étape (23) de détection d'obstacle par le dispositif de détection (8) sans contact dans un volume de contrôle (17) balayé par le faisceau lumineux (10),
- une étape d'avancement (25) du chariot élévateur (1) par rapport à la structure (16) jusqu'à une position de dépose si aucun obstacle n'a été détecté dans le volume de contrôle (17) par le dispositif de détection (8) sans contact lors de l'étape (23) de détection d'obstacle, et
- une étape (28) de dépose de la charge sur la structure à la position de dépose.

2. Procédé selon la revendication 1, dans lequel l'étape (23) de détection d'obstacle comprend :

- une sous-étape (23a) d'activation du dispositif de détection (8) lorsque la fourche (4) de l'organe de levage a atteint une première hauteur Z1 prédéterminée par rapport au sol lors positionnement en hauteur de la fourche, et
- une sous-étape (23b) de désactivation du dispositif de détection (8) lorsque la fourche (4) de l'organe de levage a atteint une deuxième hauteur Z2 par rapport au sol, qui est différente de la première hauteur Z1 prédéterminée.

3. Procédé selon la revendication 1 ou 2, comprenant une étape de contrôle (26) du déplacement rectiligne du chariot élévateur (1) jusqu'à la position de dépose lors de l'étape d'avancement (25).

4. Procédé selon la revendication 3, dans lequel l'étape (28) de dépose de la charge sur la structure à la position de dépose est réalisée si le déplacement contrôlé du chariot élévateur (1) est purement rectiligne ou sensiblement rectiligne.

**Patentansprüche**

1. Verfahren (20) zum Transportieren und Absetzen einer Last (12) durch einen autonomen Hubwagen (1), umfassend:

- ein Huborgan (2), das eine Gabel (4) umfasst, die vertikal bewegbar ist und mit mindestens einem Arm (4b, 4b) zum Heben von Lasten (10) ausgestattet ist;
- ein Antriebssystem (6) zum Verfahren des Hubwagens (1),
- eine Steuereinheit (14), die in der Lage ist, den Betrieb des Antriebssystems (6) zu steuern, um den Hubwagen autonom zu führen, und die in der Lage ist, das vertikale Verfahren der Gabel (4) des Huborgans zu steuern,
- eine Detektionsvorrichtung (8) zur berührungslosen Detektion eines Hindernisses, wobei die Detektionsvorrichtung (8) zusammen mit dem Huborgan (2) bewegbar ist und in der Lage ist, einen Lichtstrahl (10) zu emittieren, der zu der Vorderseite des Hubwagens (1) gerichtet ist und mindestens eine vorgegebene ebene Detektionszone (11) abtastet, wobei die Detektionsvorrichtung (8) an dem Huborgan (2) befestigt, damit der Lichtstrahl (10) über der transportierten Last (12) verläuft, und
- eine Messvorrichtung (9) zum Bestimmen der Höhe der Gabel (4) des Huborgans in Bezug auf den Boden, wobei die Steuereinheit (14) repräsentative Informationen für die Höhe der Gabel (4) in Bezug auf den Boden, die aus der Messvorrichtung (9) hervorgehen, und für das Vorhandensein oder Nichtvorhandensein des Hindernisses in der vorgegebenen ebenen Detektionszone (11), die aus der Detektionsvorrichtung (8) zur berührungslosen Detektion hervorgehen, empfängt und in der Lage ist, den Betrieb des Antriebssystems (6) und das vertikale Verfahren der Gabel (4) des Huborgans in Abhängigkeit von diesen Informationen zu steuern, wobei das Verfahren umfasst:

- einen Schritt (21) des Positionierens des Hubwagens in Bezug auf eine Struktur (16), die dazu bestimmt ist, die Last zu tragen, in eine Annäherungsposition in Bezug auf die Struktur;

- wenn der Hubwagen (1) die Annäherungsposition erreicht hat, einen Schritt (22) des Positionierens der Gabel (4) des Huborgans in der Höhe und einen Schritt (23) der Hindernisdetektion durch die Detektionsvorrichtung (8) zur berührungslosen Detektion in einem Steuervolumen (17), das von dem Lichtstrahl (10) abgetastet wird,

- einen Schritt (25) des Vorwärtsfahrens des Hubwagens (1) in Bezug auf die Struktur (16) bis zu einer Absetzposition, wenn bei dem Schritt (23) der Hindernisdetektion kein Hindernis in dem Steuervolumen (17) durch die Detektionsvorrichtung (8) zur berührungslosen Detektion detektiert worden ist, und

- einen Schritt (28) des Absetzens der Last auf der Struktur an der Absetzposition.

2. Verfahren nach Anspruch 1, wobei der Schritt (23) der Hindernisdetektion umfasst:

- einen Teilschritt (23a) des Aktivierens der Detektionsvorrichtung (8), wenn die Gabel (4) des Huborgans bei der Positionierung der Gabel in der Höhe eine vorbestimmte erste Höhe Z1 in Bezug auf den Boden erreicht hat, und

- einen Teilschritt (23b) des Deaktivierens der Detektionsvorrichtung (8), wenn die Gabel (4) des Huborgans eine zweite Höhe Z2 in Bezug auf den Boden erreicht hat, die von der vorbestimmten ersten Höhe Z1 verschieden ist.

3. Verfahren nach Anspruch 1 oder 2, umfassend einen Schritt (26) des Steuerns des geradlinigen Verfahrens des Hubwagens (1) bis zu der Absetzposition bei dem Schritt (25) des Vorwärtsfahrens.

4. Verfahren nach Anspruch 3, wobei der Schritt (28) des Absetzens der Last auf der Struktur an der Absetzposition ausgeführt wird, wenn das gesteuerte Verfahren des Hubwagens (1) rein geradlinig oder im Wesentlichen geradlinig ist.

## Claims

1. Method (20) of transporting and depositing a load (12) by means of an autonomous forklift truck (1) comprising:

- a lifting member (2) comprising a fork (4) mobile vertically and provided with at least one arm (4a, 4b) for lifting loads (10),

- a drive system (6) for moving the forklift truck (1),

- a control unit (14) able to control the operation of the drive system (6) to guide the forklift truck autonomously and able to control the vertical movement of the fork (4) of the lifting member,

- a device (8) for contactless detection of an obstacle, said detection device (8) being mobile conjointly with the lifting member (2) and able to emit a light beam (10) directed toward the front of the forklift truck (1) and sweeping at least one predefined plane detection zone (11), the detection device (8) being fixed to the lifting member (2) so that said light beam (10) passes above the transported load (12), and

- a measuring device (9) for determining the height of the fork (4) of the lifting member relative to the ground, the control unit (14) receiving information representing the height of the fork (4) relative to the ground coming from the measuring device (9) and representing the presence or the absence of an obstacle in said predefined plane detection zone (11) coming from the contactless detection device (8) and able to control the drive system (6) and the vertical movement of the fork (4) of the lifting member as a function of that information,

said method comprises:

- a step (21) of positioning the forklift truck relative to a structure (16) intended to support the load in an approach position relative to said structure,

- when the forklift truck (1) has reached the approach position a step (22) of heightwise positioning of the fork (4) of the lifting member and a step (23) of obstacle detection by the contactless detection device (8) in a control volume (17) swept by the light beam (10),

- a step (25) of forward movement of the forklift truck (1) relative to the structure (16) to a deposition position if no obstacle has been detected in the control volume (17) by the contactless detection device (8) during the step (23) of obstacle detection, and

- a step (28) of depositing the load on the structure at the deposition position.

2. Method according to Claim 1 in which the obstacle detection step (23) comprises:

- a substep (23a) of activation of the detection device (8) when the fork (4) of the lifting member has reached a predetermined first height Z1 relative to the ground during heightwise positioning of the fork, and
- a substep (23b) of deactivation of the detection device (8) when the fork (4) of the lifting member has reached a second height Z2 relative to the ground that is different from the predetermined first height Z1.

3. Method according to Claim 1 or 2 comprising a step (26) of controlling the rectilinear movement of the forklift truck (1) to the deposition position during the forward movement step (25).

4. Method according to Claim 3 in which the step (28) of depositing the load on the structure in the deposition position is carried out if the controlled movement of the forklift truck (1) is purely rectilinear or substantially rectilinear.

[Fig. 1]

[Fig. 2]

EP 4 558 439 B1

[Fig. 3]

[Fig. 4]

13

[Fig. 5]

[Fig. 6]

[Fig. 7]

[Fig. 8]

[Fig. 9]

20

```
┌──────────────────┐
│        21        │
└──────────────────┘
          │
          ▼
┌──────────────────┐
│        22        │
└──────────────────┘
          │
          ▼
┌──────────────────┐        ┌──────────────────┐
│       23a        │        │                  │
23     │       23b        │────────│        24        │
└──────────────────┘        └──────────────────┘
          │
          ▼
┌──────────────────┐
│        25        │
└──────────────────┘
          │
          ▼
┌──────────────────┐        ┌──────────────────┐
│        26        │───────▶│        27        │
└──────────────────┘        └──────────────────┘
          │
          ▼
┌──────────────────┐
│        28        │
└──────────────────┘
```

**EP 4 558 439 B1**